# EUROPEAN PATENT APPLICATION

(11) **EP 3 054 692 A1**
(43) Date of publication of application: **10.08.2016**
(21) Application number: 14830363.9
(22) Date of filing: 27.02.2014
(51) Int. Cl.: H04N 21/2665, H04N 21/218, H04N 21/258

(54) **MULTI-VIEWPOINT MOVING IMAGE LAYOUT SYSTEM**

(30) Priority: 01.10.2013 JP 2013206388
(71) Applicant: Dentsu Inc., Tokyo 105-7001 (JP); Information Services International-Dentsu, Ltd., Tokyo 108-0075 (JP)
(72) Inventor: SHIMURA, Akihiro, Tokyo 105-7001 (JP); OKUDE, Mayumi, Tokyo 108-0075 (JP)
(74) Representative: Ström & Gulliksson AB
(86) International application number: PCT/JP2014/001050
(87) International publication number: WO 2015/049810

(57) **Abstract**

Problem to be Solved

To dynamically change a screen layout of a multi-view video.

Solution

Viewing behavior history transmitting means 11 transmits a viewing behavior history on played multi-view video data to a distributing computer 2. User-specific viewing behavior history receiving means 7 of the distributing computer 2 receives a viewing operation history, which is the viewing behavior history on a distributed multi-view video, from a terminal computer, and user-specific viewing behavior history storing means 6 stores the viewing operation history for each user. When distributing the multi-view video data to a certain user, distributing means 5 refers to the viewing behavior history of another user, which has been stored in the user-specific viewing behavior history storing means 6, and distributes the multi-view video data to be transmitted, a screen layout of which is changed.

## Description

### TECHNICAL FIELD

The present invention relates to a multi-view video layout system and in particular to a screen layout switching process of multi-view video.

### BACKGROUND

It is disclosed in JP 2008-211417 A that video sequences captured from multiple viewpoints by using plural cameras are switched and distributed.

### SUMMARY OF THE INVENTION

### Problem to be Solved by the Invention

A system disclosed in JP 2008-211417 switches images from the plural cameras on a distributor side and provides the images to a receiver. Thus, a system that switches multi-view video sequences displayed on one screen did not exist.

The subject applicant has already filed a patent application on a device for generating a multi-view video in a video distribution system that allows the multi-view video sequences to be displayed on one screen (JP Patent Application 2013-045286).

When the multi-view video, which is generated as described above, is distributed, it is possible to send all information from a distributing computer and change a screen layout and the like on a terminal side.

However, it is difficult for a user to appropriately carry out such a process of changing the screen layout.

The present invention has an object to provide a multi-view video layout system that can easily change a screen layout of multi-view video in a system that allows the multi-view video sequences to be displayed on one screen.

### Means for Solving the Invention

1) A multi-view video distribution system according to the present invention includes: A) a distributing computer and B) a terminal computer. The distributing computer includes: a1) distributing means for distributing multi-view video data, in which a plurality of multi-view video sequences for the same subject as individual video sequences is combined and laid out on one screen; a2) user-specific viewing behavior history receiving means for receiving a viewing behavior history on a distributed multi-view video; and a3) user-specific viewing behavior history storing means for storing the received user-specific viewing behavior history for each user. The terminal computer includes: b1) receiving means for receiving the multi-view video data from the distributing computer; b2) playback means for playing the multi-view video data; and b3) viewing behavior history transmitting means for transmitting the viewing behavior history on the played multi-view video data to the distributing computer. C) When distributing the multi-view video data to a certain user, the distributing means refers to the viewing behavior history of another user that has been stored in the user-specific viewing behavior history storing means and then distributes the multi-view video data, a screen layout of which is changed.

Therefore, it is possible to distribute the multi-view video data, the screen layout of which is changed, by referring to the viewing behavior history of the other user.
2) In the multi-view video distribution system according to the present invention, the viewing behavior history is a screen layout tendency. Therefore, it is possible to distribute the multi-view video data, the screen layout of which is changed, by referring to the screen layout tendency of the other user.
3) In the multi-view video distribution system according to the present invention, the multi-view video data includes at least one main screen and at least one sub-screen of the individual video sequences, and the distributing means distributes the multi-view video data, the screen layout of which is changed, on the basis of a switching rate that, of the plural individual video sequences, the individual video sequence initially displayed on the main screen is switched to be displayed on the sub-screen. Therefore, it is possible to distribute the multi-view video data on the basis of a history of the switching to the sub-screen.
4) In the multi-view video distribution system according to the present invention, the multi-view video data includes the at least one main screen and the at least one sub-screen of the individual video sequences, and the distributing means distributes the multi-view video data, the screen layout of which is changed, on the basis of a switching rate that, of the plural individual video sequences, the individual video sequence initially displayed on the sub-screen is switched to be displayed on the main screen. Therefore, it is possible to distribute the multi-view video data on the basis of a history of the switching to the main screen.
5) In the multi-view video distribution system according to the present invention, the multi-view video data includes the main screen and the sub-screen, a display area of which is smaller than the main screen, and the distributing means distributes the multi-view video data that changes the screen layout of the multi-view video data on the basis of a display rate of the individual video sequence of the plural the individual video sequences that is changed during playback. Therefore, it is possible to distribute the multi-view video data on the basis of the display rate of the individual video sequence.
6) In the multi-view video distribution system according to the present invention, the viewing behavior history is an evaluation of the individual video sequence that is made by the other user during playback. Therefore, it is possible to distribute the multi-view video data on the basis of the evaluation of the individual video sequence that is made by the other user during the playback.
7) In the multi-view video distribution system according to the present invention, the distributing means refers to the viewing behavior history of a user who belongs to a user group with a similar user attribute, and distributes the multi-view video data in which the screen layout of the multi-view video is changed. Therefore, it is possible to distribute the multi-view video data on the basis of the viewing behavior history of the user who belongs to the user group with the similar user attribute.
8) In the multi-view video distribution system according to the present invention, the user attribute is a static attribute of the user. Therefore, it is possible to distribute the multi-view video data on the basis of the viewing behavior history of the other user whose static attribute is similar to that of the user.
9) In the multi-view video distribution system according to the present invention, the user attribute is a viewing tendency attribute that is changed by viewing of the user. Therefore, it is possible to distribute the multi-view video data on the basis of the viewing tendency attribute of the user.
10) In the multi-view video distribution system according to the present invention, the user attribute is an attribute of a video that was viewed in the past. Therefore, it is possible to distribute the multi-view video data on the basis of the attribute of the video that the user viewed in the past.
11) In the multi-view video distribution system according to the present invention, the viewing tendency attribute is an attribute of the screen that was viewed in the past. Therefore, it is possible to distribute the multi-view video data on the basis of the attribute of the screen that was viewed in the past.
12) In the multi-view video distribution system according to the present invention, the multi-view video, the screen layout of which is changed, is added with additional data for switching the screen layout on the terminal computer, and the playback means of the terminal computer changes the screen layout on the basis of the additional data for playback. Therefore, it is possible by transmitting the additional data to play the multi-view video data, the screen layout of which has been switched, on the terminal computer.
13) In the multi-view video distribution system according to the present invention, the screen layout is automatically changed without an operation by a viewer of the terminal computer. Therefore, it is possible to distribute the multi-view video data by automatic switching.
14) In the multi-view video distribution system according to the present invention, the viewer of the terminal computer is informed of the change of the screen layout before the change is made. Therefore, it is possible to distribute the multi-view video data that allows the viewer to confirm switching before the switching is made.
15) In the multi-view video distribution system according to the present invention, the screen layout is automatically changed after the viewer of the terminal computer is informed of the change. Therefore, it is possible to distribute the multi-view video data, for which switching process is automatically executed after the informing.
16) In the multi-view video distribution system according to the present invention, the screen layout is changed after the viewer of the terminal computer is informed of the change only in a case where the viewer allows the change. Therefore, it is possible to distribute the multi-view video data, for which the switching process is automatically executed after the informing.
17) In the multi-view video distribution system according to the present invention, after the screen layout is changed, information on restoration of the screen layout before the change is informed. Therefore, it is possible to distribute the multi-view video data, the screen layout of which can easily be restored by the viewer after the change.
18) In the multi-view video distribution system according to the present invention, the multi-view video, the screen layout of which is changed, is transmitted from the distributing computer to the terminal computer. Therefore, the terminal computer can distribute the multi-view video data only for display.
19) In the multi-view video distribution system according to the present invention, the distributing computer stores plural sets of the multi-view video data, and, when a distribution request, which specifies a certain set of the multi-view video data, is provided from the terminal computer, the distributing computer refers to the viewing behavior history of the other user, changes the screen layout of the multi-view video upon distribution, and then distributes the multi-view video. Therefore, it is possible to distribute the multi-view video data, the screen layout of which is changed upon the distribution.
20) In the multi-view video distribution system according to the present invention, the distributing computer stores the plural sets of the multi-view video data, and the distributing computer refers to the viewing behavior history of the other user during the distribution, changes the screen layout of the multi-view video, and then distributes the multi-view video. Therefore, it is possible to distribute the multi-view video data, the screen layout of which is changed during the distribution.
21) In the multi-view video distribution system according to the present invention, when the multi-view video, the screen layout of which is changed, is distributed, control data that restricts the switching in accordance with a terminal property of the terminal computer is transmitted, and the playback means of the terminal computer determines whether to play the video, the screen layout of which has been changed, on the basis of the control data and attribute information of the terminal that play the video. Therefore, it is possible to distribute the multi-view video data that is changed on the basis of the attribute information of the terminal that plays the video.
22) In the multi-view video distribution system according to the present invention, the attribute information of the terminal computer is location information of the terminal. Therefore, it is possible to distribute the multi-view video data that is changed on the basis of a location of the terminal that plays the video.
23) In the multi-view video distribution system according to the present invention, the attribute information of the terminal computer is physical restriction of the terminal. Therefore, it is possible to distribute the multi-view video data that is changed on the basis of the physical restriction of the terminal that plays the video.
24) A multi-view video distribution device according to the present invention includes the distributing means and the user -specific viewing behavior history storing means. The distributing means distributes the multi-view video data, in which the plurality of multi-view video sequences for the same subject as the individual video sequences is combined and laid out on the one screen. The user viewing behavior history storing means receives the viewing behavior history on the distributed multi-view video for the each user and storing the received viewing behavior history for the each user. When distributing the multi-view video data to a certain user, the distributing means refers to the viewing behavior history of the other user that has been stored in the user viewing behavior history storing means and then distributes the multi-view video data, the screen layout of which is changed. Therefore, it is possible to distribute the multi-view video data, the screen layout of which is changed, by referring to the viewing behavior history of the other user.
25) The multi-view video distribution device according to the present invention includes the receiving means, the playback means, and the viewing behavior history transmitting means. The receiving means receives the multi-view video data, in which the plurality of multi-view video sequences for the same subject as the individual video sequences is combined and laid out on the one screen, from the distributing computer. The playback means plays the multi-view video data. The viewing behavior history transmitting means transmits the viewing behavior history on the played multi-view video data to the distributing computer. The multi-view video data, the screen layout of which is changed, is added with additional data for switching the screen layout on the terminal computer, and the playback means changes the screen layout on the basis of the additional data for playback. Therefore, it is possible to play the multi-view video data, the screen layout of which is switched by transmitting the additional data, on the terminal computer.

In this specification, "change the screen layout of the multi-view video" includes a case where the plural individual video sequences that constitute the video (the multi-view video) are not changed but layout positions and a relative rate of the layout thereof are changed as well as a case where the individual video sequence is changed.

### BRIEF DESCRIPTION OF DRAWINGS

FIG. 1 is a functional block diagram of a multi-view video distribution system 1.
FIG. 2 is a view of a hardware configuration of a distributing computer 2.
FIG. 3 shows formats of user video data.
FIG. 4 shows formats of official video data.
FIG. 5 is a view of a hardware configuration of a terminal computer 3.
FIG. 6 is a flowchart of an associating process.
FIG. 7 is a flowchart of a multi-view video distribution process.
FIG. 8 is an example of a multi-view video displayed on the terminal computer.
FIG. 9 is a flowchart of a posting process.
FIG. 10 shows viewing operation history data stored in a distributing computer 2.
FIG. 11 is a flowchart of a viewing operation history storing process.
FIG. 12 is a flowchart of a switching process.
FIG. 13 shows another example of viewing operation history data stored in the distributing computer 2.
FIG. 14 shows yet another example of the viewing operation history data stored in the distributing computer 2.
FIG. 15 shows further another example of the viewing operation history data stored in the distributing computer 2.
FIG. 16 shows further another example of the viewing operation history data stored in the distributing computer 2.
FIG. 17 is a block diagram of a group of server computers.

### Description of Reference Numerals

1/ MULTI-VIEW VIDEO DISTRIBUTING SYSTEM
23/ CPU
27/ MEMORY
123/ CPU
127/ MEMORY

### DESCRIPTION OF EMBODIMENTS

### Best Mode for Carrying out the Invention

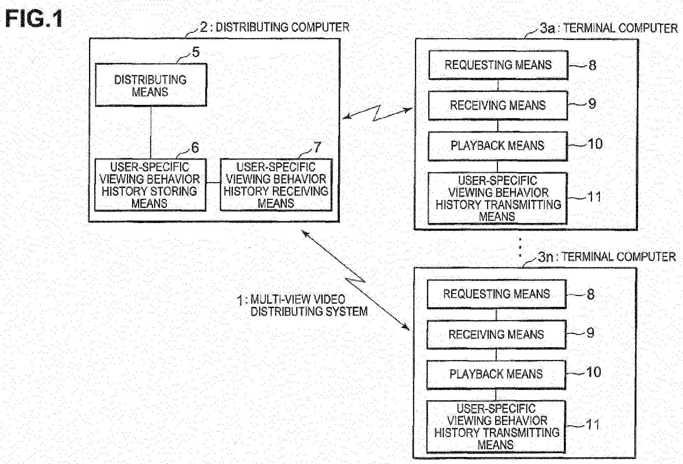

A functional block diagram in FIG. 1 shows a multi-view video distribution system 1 according to the present invention. The multi-view video distribution system 1 is configured by including a distributing computer 2 and a plurality of terminal computers 3a to 3n.

The distributing computer 2 includes distributing means 5, user-specific viewing behavior history receiving means 7, and user-specific viewing behavior history storing means 6.

With a request of multi-view video data, the distributing means 5 distributes the multi-view video data to the terminal computers 3a to 3n, which requests the multi-view video data, the multi-view video data handling each of multi-view video sequences of the same object as an individual video sequence, combining and laying out a plurality of the multi-view video sequences on one screen. The user-specific viewing behavior history receiving means 7 receives a viewing operation history, which is a viewing behavior history for the distributed multi-view video, from each of the terminal computers 3a to 3n. The user-specific viewing behavior history storing means 6 stores the user-specific viewing behavior history, which has been received, by user.

The terminal computer 3a includes requesting means 8, receiving means 9, playback means 10, and viewing behavior history transmitting means 11. The requesting means 8 requests the multi-view video data to the distributing computer 2. The receiving means 9 receives the multi-view video data transmitted from the distributing computer 2. The playback means 10 plays the received multi-view video data. The viewing behavior history transmitting means 11 transmits a viewing behavior history of the played multi-view video data to the distributing computer 2.

When distributing the multi-view video data to a certain user, the distributing means 5 of the distributing computer 2 refers to the viewing behavior history of another user, which is stored in the user-specific viewing behavior history storing means 6, and distributes the multi-view video data to be transmitted, a screen layout of which is changed. In this embodiment, as such a viewing behavior history, a distributed data attribute of the each multi-view video from the distributing computer 2, or the viewing behavior history that directly or indirectly expresses interest of the viewing user in the each multi-view video is adopted. For example, as for the individual video sequences that constitute the multi-view video, a layout is changed to display the individual video sequence, the display of which is switched from a sub-screen to a main screen by the large number of users, on the main screen.

The terminal computers other than the terminal computer 3a also have the same function.

### 2. Hardware Configuration

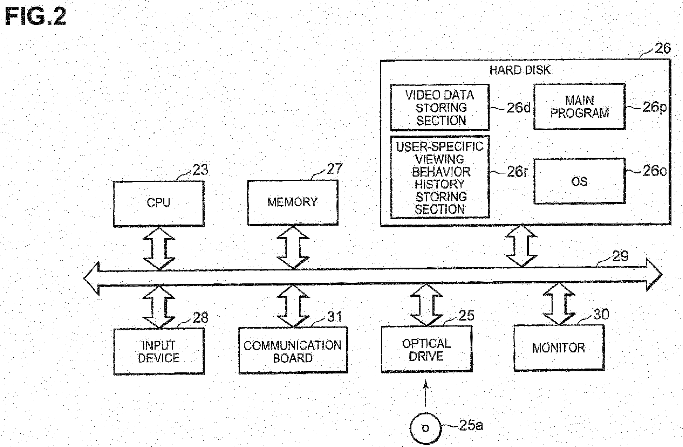

A hardware configuration of the distributing computer 2 will be described by using FIG. 2. This drawing shows an example of the hardware configuration in which the distributing computer 2 is configured by using a CPU.

The distributing computer 2 includes a CPU 23, a memory 27, a hard disk 26, a monitor 30, an optical drive 25, an input device 28, a communication board 31, and a bus line 29. The CPU 23 controls each section via the bus line 29 by following each program stored in the hard disk 26.

The hard disk 26 stores an operating system program 26o (hereinafter abbreviated as the "OS") and a main program 26p. A process by the main program 26p will be described below.

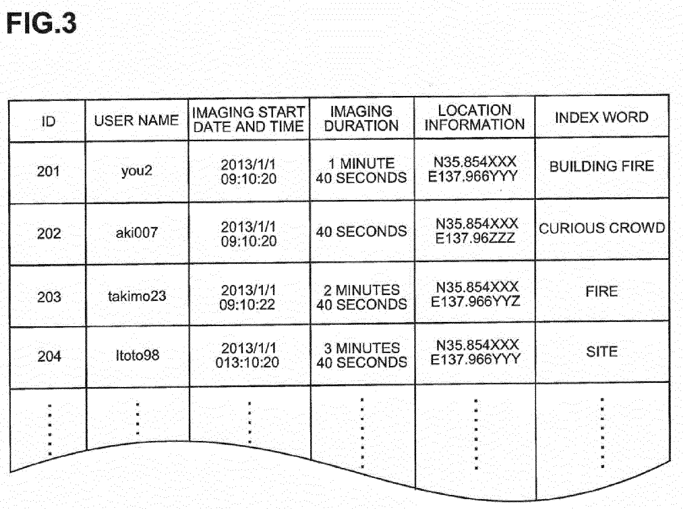

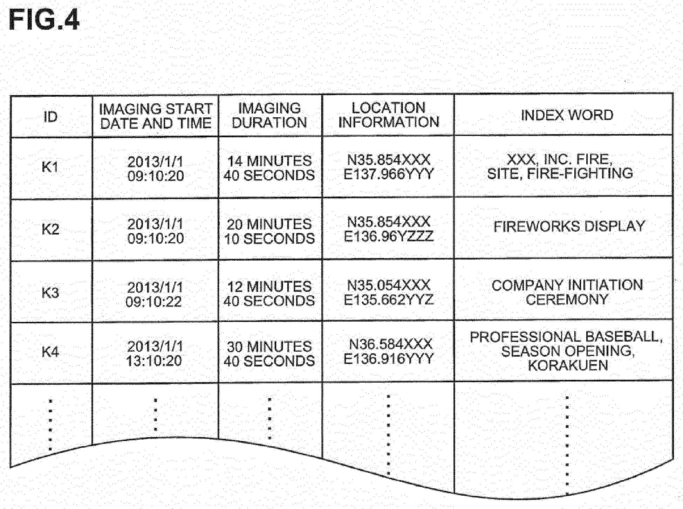

A video data storing section 26d stores user videos that are uploaded by the plurality of users and official videos of a news channel and the like. As shown in FIG. 3, the each user video is configured by including a video data ID, an uploading user name, an imaging start date and time, an imaging duration, location information, and an index word. In this embodiment, GPS information is adopted for imaging location data, and the imaging start time and the imaging duration of the video are adopted as imaging time data. As shown in FIG. 4, similar to the user video, the imaging location data and the imaging time data are added as attribute data to the video data ID of the each official video.

In this embodiment, Windows 2008R2(® or ™) is adopted as the operating system program (OS) 26o. However, the operating system program (OS) 26o is not limited thereto.

The each program described above is read out from a CD-ROM 25a that stores the program via the optical drive 25 and installed in the hard disk 26. The program may be installed in the hard disk from a computer readable recording medium other than the CD-ROM, such as a flexible disk (FD) or an IC card. Furthermore, the program may be downloaded by using a communication line.

In this embodiment, the program is installed in the hard disk 26 from the CD-ROM, and thus the program stored in the CD-ROM is indirectly executed by the computer. However, the present invention is not limited to this. The program stored in the CD-ROM may directly be executed from the optical drive 25. A computer executable program includes a program that only needs to be installed for direct execution, a program that needs to be converted to another format once (for example, extraction of compressed data and the like), and further a program that is combined with another module part.

As will be described below, the distributing computer 2 generates and distributes the multi-view video in which the official videos are combined and/or in which the user videos are combined.

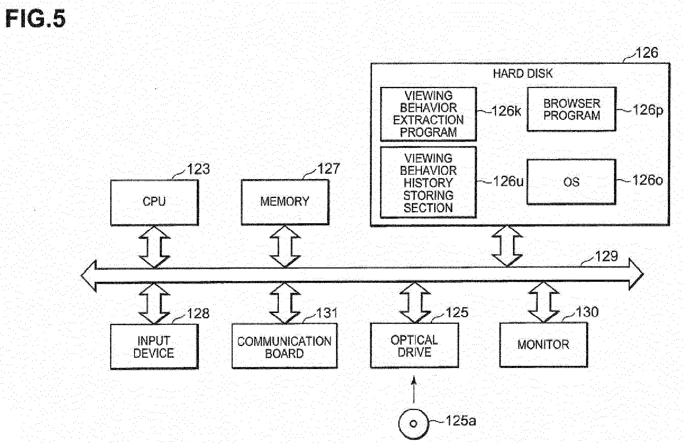

FIG. 5 shows a hardware configuration of each of the terminal computers 3a to 3n. A hard disk 126 stores a browser program 126p and an action history extraction program 126k. When a CPU 123 displays the multi-view video on a monitor 130 on the basis of the browser program 126p, the CPU 123 stores a specified viewing action taken by the user in a viewing behavior history storing section 126u on the basis of the action history extraction program 126k, and transmits the specified viewing action to the distributing computer 2. The other configuration is the same as a general computer. It should be noted that the terminal computer may be a tablet computer, a smart phone, a game console, a smart television, another type of home appliance, or the like.

In addition, the action history extraction program 126k is stored in the hard disk 126 in advance. However, this may be achieved by letting the browser program execute a necessary program by a plug-in process.

In this embodiment, a case in which the browser program 126p, the action history extraction program 126k,, the viewing behavior history storing section 126u are stored in the hard disk 126 is described. However, storage locations of these are not limited thereto.

### 3. Flowchart

### 3.1 Multi-view video generating process

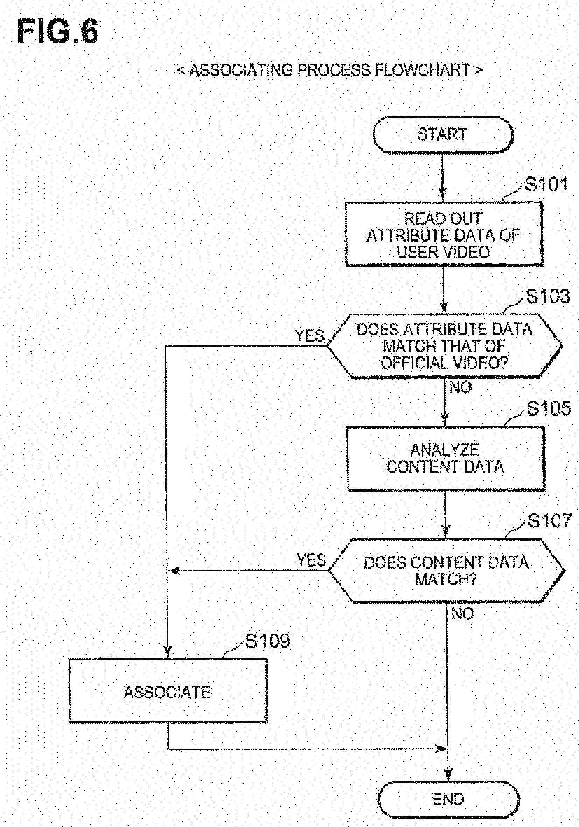

Next, a process of associating the user video and the official video will be described by using FIG. 6.

The CPU 23 of the multi-view video transmitting device 1 reads out the attribute data of the user video (step S101 of FIG. 6), more specifically, the imaging location, the imaging date and time, and the index word. Then, the CPU 23 determines whether any of the attribute data matches that of the official video (step S103). This determination is made on the basis of whether divergences in the location information and the imaging date and time are within predetermined ranges. In this embodiment, the determination is made whether the divergence in the location information as a linear distance is within a specified distance (for example, 100 meters) and, as for the divergence in the time, whether the imaging date and time of the user video at least partially overlaps that of the official video. For example, when such user data as that shown in FIG. 3 is available, the divergence in the location between user videos 201, 203 and an official video K1 shown in FIG. 4 is within the specified distance, and the date and time overlap among the videos. Thus, the user videos 201, 203 are determined as matching video data. Meanwhile, while a user video 202 overlaps the official video K1 in terms of a time period, the divergence in the location between the user video 202 and the official video K1 exceeds the specified distance. Thus, the user video 202 is not determined as the matching video data. Furthermore, while the divergence in the location between a user video 204 and the official video K1 is within the specified distance, the time period therebetween do not overlap. Thus, the user video 204 is not determined as the matching video data.

Next, the CPU 23 analyzes content data (step S105). Then, if the content data match each other, the user video is associated with the official video (step S107). This is done because there is a case where the location or the time period of the video for the same object is apart from the official video.

Cases where the time period is apart but the location is close include videos of a child growth record, videos of sport or dance practices, videos of seasonal parades in a theme park, video data captured by a monitoring camera at the same location or a stationary camera, and the like.

Alternatively, cases where the time period is close but the location is apart include videos of a virtual session in remote places (for example, a vocal: Tokyo, a guitar: Osaka, a bass: Nagoya, etc.), videos of year-end countdown concerts in various locations, videos of games held in various locations in the Olympic Games, videos that capture states of athletes before a game at a venue for the game and a venue for training, videos of runners in a marathon relay race, videos of seminars conducted in parallel in the same time period, video data of monitoring cameras in a large shopping complex, and the like.

The official video data and the user video data associated therewith can be distributed as the multi-view video.

In this embodiment, the official video data is laid out as the main screen while the user video data associated therewith is laid out as the sub-screen. However, the configuration of the multi-view video is not limited thereto. For example, the multi-view video may be generated only by the official video data. The user video data may be laid out as the main screen while the official video data associated therewith may be laid out as the sub-screen. Alternatively, the multi-view video may be configured by only including the user video.

In addition, formats of the official video and the user video may be other than those presented in FIGs. 3, 4.

It is needless to say that such an official video or such a user video includes both of a recorded video and a live video.

### 3.2 Multi-view video distribution process

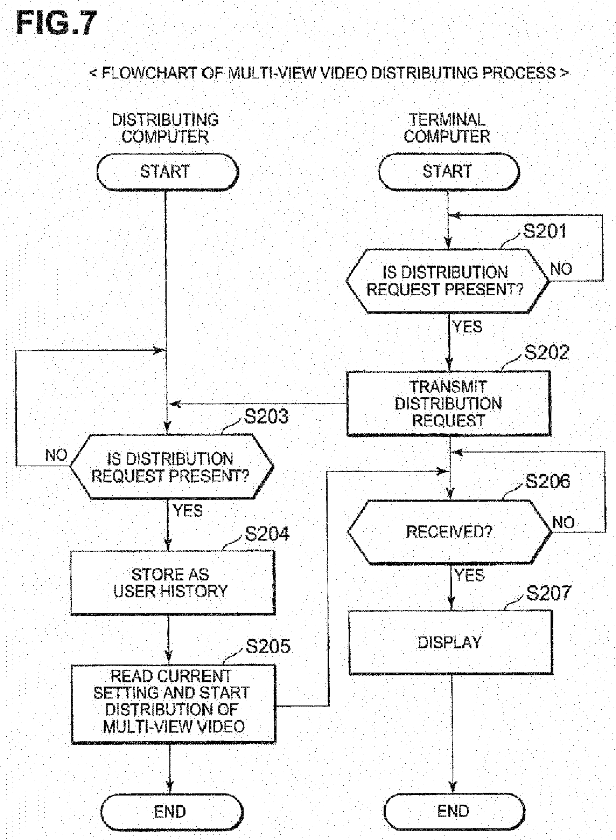

A distribution process of the multi-view video, which is stored in the video data storing section 26d, will be described by using FIG. 7. A description will be made below on a case where the user enters an ID and a password to login to a multi-view video distribution system and selects any of the plural multi-view videos, distribution of each of which is allowed in advance.

The CPU 123 of the terminal computer determines whether a distribution request command from the user is made (step S201). If the distribution request command has been made, a distribution request is transmitted to the distributing computer (step S202). The CPU 23 of the distributing computer (see FIG. 2) determines whether the distribution request, which specifies the multi-view video, has been made from the terminal computer (step S203), and, if such a distribution request has been made, stores the distribution request as the user history (step S204). The CPU 23 starts distribution of the multi-view video while adding a current screen layout parameter thereto (step S205).

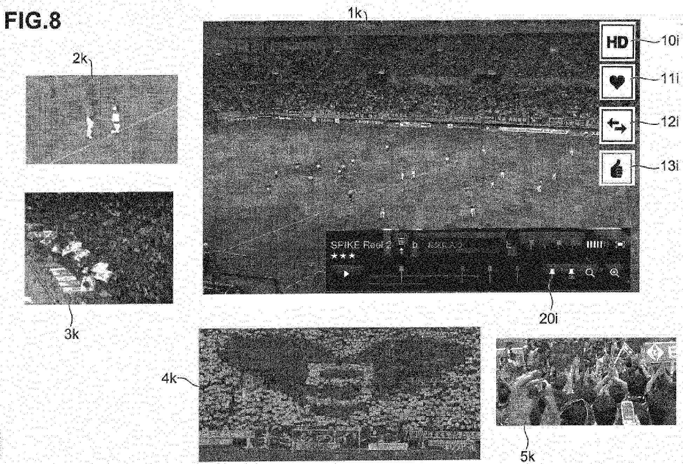

The CPU 123 of the terminal computer determines whether to receive the multi-view video (step S206), and, once received, displays the multi-view video on the monitor by following setting of the screen layout parameter (step S207). An example of the multi-view video that includes screens 1k to 5k distributed in one screen is shown in FIG. 8.

Just as described, plural types of the multi-view videos, in each of which the plural video sequences are combined, are stored in advance. When a list request is made, a list is transmitted to the terminal computer and displayed on the terminal computer. Accordingly, the specific multi-view video selected by the user can be distributed to the terminal computer.

### 3.3 Viewing operation process on the user terminal

After the distribution of the multi-view video is started, an evaluation of the multi-view video, a comment for the multi-view video, and the like can be added, as in a conventional video distributing website.

For example, in FIG. 8, the screen 1k is the main screen. A tag can be added to the main screen by clicking a tag icon 20i during an arbitrary playing time period of the video. The tag can be used to indicate that the user focuses his/her attention to performance when he/she finds the remarkable performance 1 minute 20 seconds after the start of the video, for example. In addition, a comment can be added to the tag. An icon 10i is used to "switch image quality", an icon 11i is used to "register this as a favorite video", an icon 12i is used to "share this video", and an icon 13i is used to "inform the video has been highly evaluated".

A process between the distributing computer and the terminal computer when a posting command of such a comment or the like is made is the same as a conventional process. For example, the process is executed as follows when the user watches the displayed multi-view video and selects the icon to be posted.

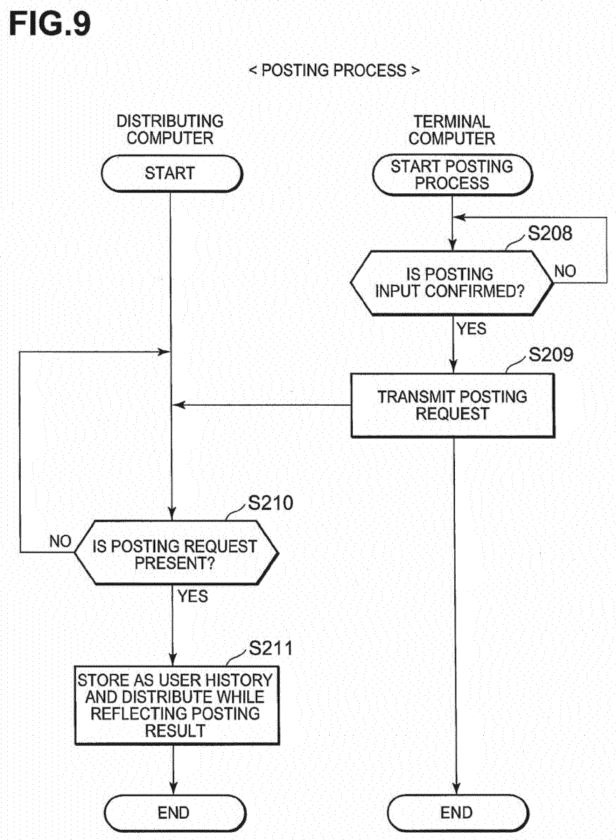

The CPU 123 of the terminal computer determines whether a confirmation instruction of posting input is present (step S208 in FIG. 9), and, if a posting command is present, transmits this to the distributing computer (step S209).

The CPU 23 of the distributing computer (see FIG. 2) determines whether there is a post from the terminal computer (step S210), and, if such a posting request is made, stores the post as the user history and distributes while reflecting a posting result (step S211).

In this embodiment, a tag post and a comment on the tag post are adopted as the post. However, the post is not limited thereto, and may be a ticker/superimposed post or a post of a clickable link, for example.

In addition, the icon 10i to the icon 13i are merely one type of examples, and another type of icons may be adopted.

Furthermore, viewing operations other than posting, such as "an on-mouse process for each individual viewpoint", "a volume increasing/reducing process", "a stereo/monaural switching process", "a switching process to the main screen", "a camera group changing process", "a zoom-in/zoom-out function executing process", and "a full-screen display function executing process", can be executed by selecting the icons. Here, the on-mouse process refers to a process in which a pointing device is moved to the certain individual video sequence.

### 3.4 Screen layout changing process by user's viewing process

The distributing computer 2 stores the history of the viewing operations executed by the user on the terminal computer for the each user, and uses such a history to change the screen layout parameter in the distribution.

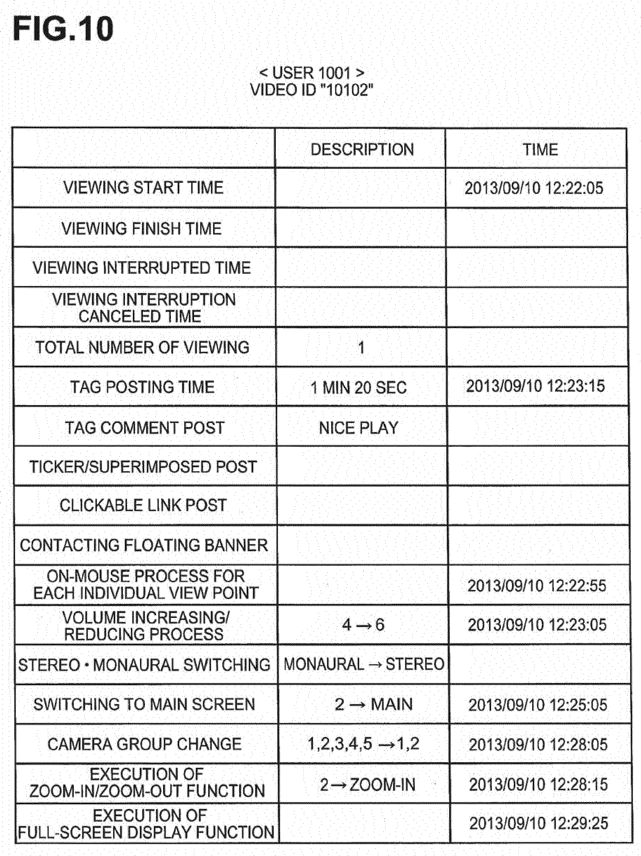

The viewing history is data generated for the each multi-view video in conjunction with the distribution of the multi-view video data from the distributing computer 2. In this embodiment, "a viewing start time", "a viewing finish time", "a viewing interrupted time", "a viewing restart time", and "the total number of viewing" are stored for the each user and each video ID as shown in FIG. 10.

Furthermore, "the content of a tag post and a posting time", a "the content of a tag comment and a posting time", "the content of a ticker/superimposed post and a posting time", "the content of a clickable link post and a posting time", "an ID and a contact time of a contacted floating banner", "the on-mouse process for the each individual viewpoint and an on-mouse time", "the volume increasing/reducing process and a process time", "the stereo/monaural switching process and a process time", "the switching process to the main screen and a process time", "the camera group changing process and a process time", "the zoom-in/zoom-out function executing process and a process time", and "the full-screen display function executing process and a process time", as the behavior histories during the distribution, are stored for the each user and the each video ID as shown in FIG. 10. As viewing behavior data that directly or indirectly indicates interest of the user who watched the multi-view video, these are used for a dynamic switching distribution process, which will be described below.

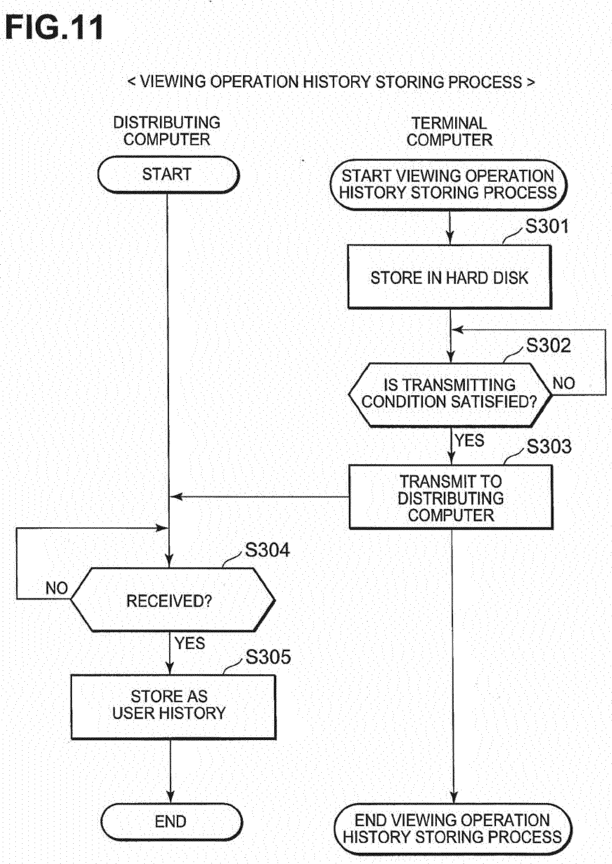

A process of transmitting such a viewing operation history to the distributing computer will be described by using FIG. 11.

The CPU 123 of the terminal computer stores the viewing operation history in the hard disk 126 (step S301). The CPU 123 determines whether a transmitting condition is satisfied (step S302), and, if the transmitting condition is satisfied, transmits the viewing operation history to the distributing computer (step S303). In this embodiment, an elapsed time from storage is adopted as the transmitting condition, and, when a specified time elapses, the CPU 123 transmits the viewing operation history from the terminal computer to the distributing computer. However, such a transmitting condition is not limited to the above, and an operation after the user finishes watching the video or an operation that is stored as the history may be adopted.

In addition, it may be inquired whether there is the history to be transmitted from the distributing computer, and the terminal computer may determine this.

The CPU 23 of the distributing computer determines whether such a history has been received (step S304), and, once received, stores this as the user history in an accumulated manner for the each user as shown in FIG. 10 (step S305).

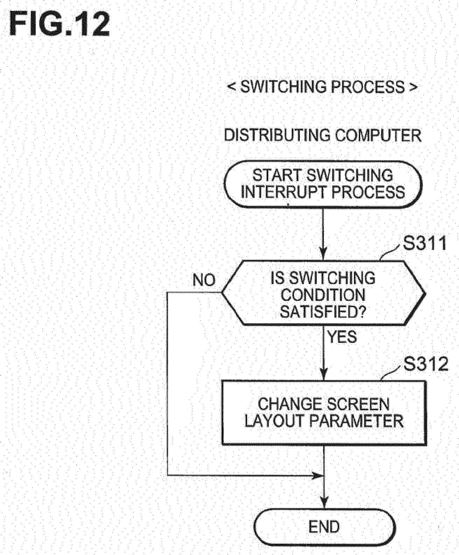

The CPU 23 of the distributing computer uses the accumulated user histories to execute an interrupt process for changing the screen layout parameter. In this embodiment, as shown in FIG. 12, the CPU 23 determines whether a switching condition is satisfied (step S311), and, if the switching condition is satisfied, rewrites the screen layout parameter (step S312).

For example, regarding the certain distributed multi-view video, if 60% or more of the users, who have already watched the video, switched a certain sub-screen to the main screen, a parameter is changed for other users so that the certain sub-screen is displayed as the main screen.

As described above, by dynamically switching the screen layout parameter, the terminal computer provides the display of the different screen layout. Just as described, when the multi-view video is distributed to a certain user, the viewing behavior of the other user is referred, so as to distribute the multi-view video data with the changed screen layout. Accordingly, regarding the each video sequence that constitutes the multi-view video, the multi-view video can be distributed in the screen layout that is determined on the basis of the interests of the other users.

In the above example, the viewing behavior of the other user is referred to change the screen layout for the user. However, the viewing operation history of the user himself/herself may be referred to change the screen layout for the user. For example, for a user who frequently switches the video sequence of a goal to the main screen in the multi-view videos of football games, the multi-view videos of the football games may be distributed in such a screen layout. For example, an attribute tag for the individual viewpoint may be referred.

When the same content is watched repeatedly, the content may be distributed in combination with an individual video sequence that has not been watched. Just as described, the screen layout on the terminal computer of the specified user can dynamically be changed by a third person or by the operation history of the user himself/herself.

In addition, for the user who is subjected to the dynamic change as described above, the operation histories of the users whose user attributes are similar to the user may be referred, instead of the operation histories of all the users. As such a user attribute, for example, a user group in which a static attribute such as age is similar, a user group in which a dynamic viewing tendency attribute, which is changed by viewing, is similar, a user group in which a past viewing video attribute is similar, a user group in which a past viewing screen attribute is similar, and the like can be adopted. For example, a user who likes a specific baseball team may refer to the behavior histories in the user group with the same attribute.

Furthermore, when switching the layout, the time period may be detected as a parameter. For example, if there is a tendency that a certain sub-screen of the multi-view video is switched to the main screen in the certain time period, this switching may be done in this time period.

As described above, it is possible to suggest the appropriate screen layout for the distributed multi-view video on the terminal computer on the basis of the viewing behavior of the user.

### 4. Other Embodiments

As the data for changing the screen layout parameter, for example, a layout tendency of each constituting small video screen, the constituting small video screen whose transition to the sub-screen is low, the constituting small video screen whose transition to the main screen is high, a screen zoom-in rate of the constituting small video screen, and the like can be adopted. In addition, it is set such that the video sequence on the each constituting small video screen can be evaluated and that the layout tendency may be determined on the basis of whether the constituting small video sequence is highly evaluated.

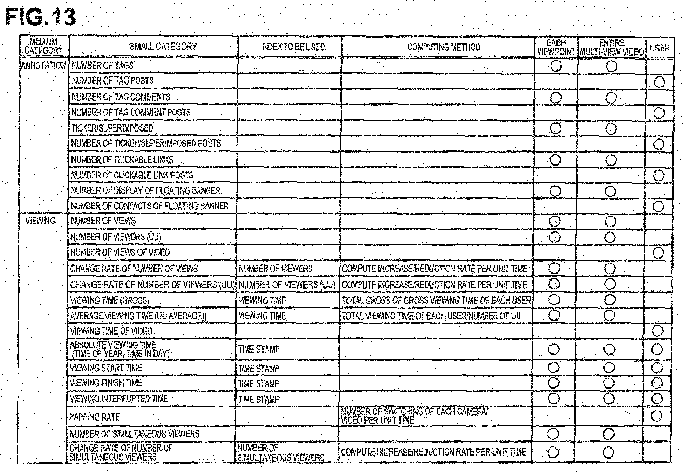

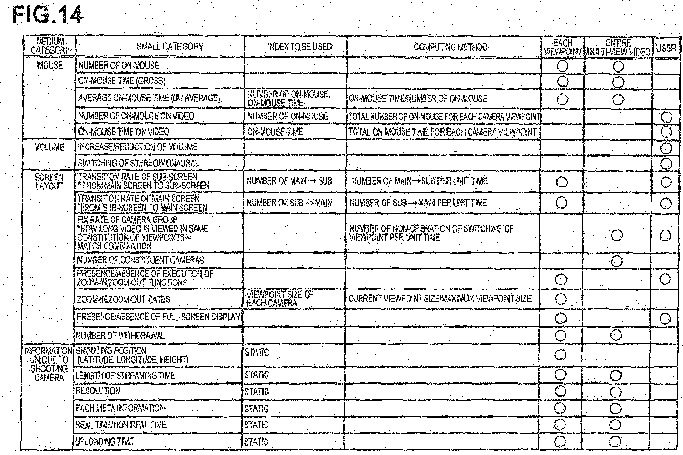

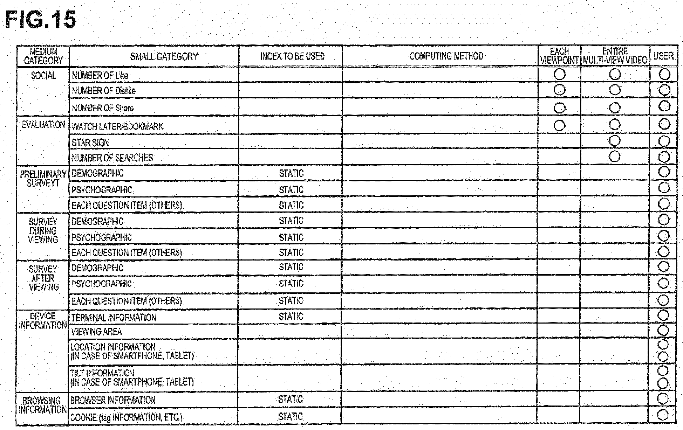

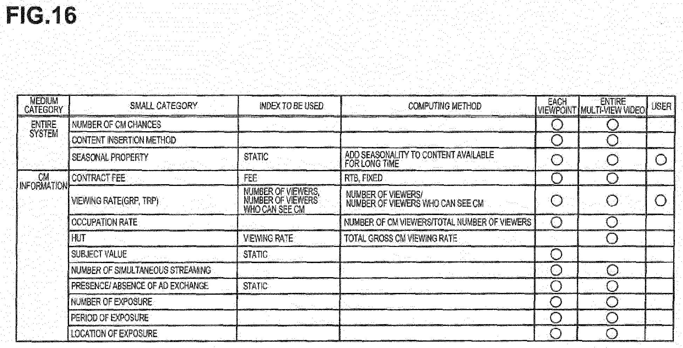

FIG. 13 to FIG. 16 show lists of the attribute data determined on the basis of the viewing history of the each user, which is stored in the distributing computer. For example, like the "viewing start time", three elements of the viewpoint, the total multi-view video, and the user are stored for some attributes. Meanwhile, like the "number of tag comments", only the user is stored for the other attributes. Since the behavior history related to viewing is stored for the each multi-view video and/or for the each user in the distributing computer, just as described, it is possible to switch the dynamic screen layout of the distributed multi-view video.

In this embodiment, the screen layout is dynamically switched on the basis of additional data for the screen layout (layout specified data). Such switching may be done by using a VIDEO tag of HTML 5, for example, so as to change the location of the screen and/or a reduction rate or the like.

In addition, instead of switching the layout on the user terminal by using the additional data, the screen layout may directly be changed before distribution.

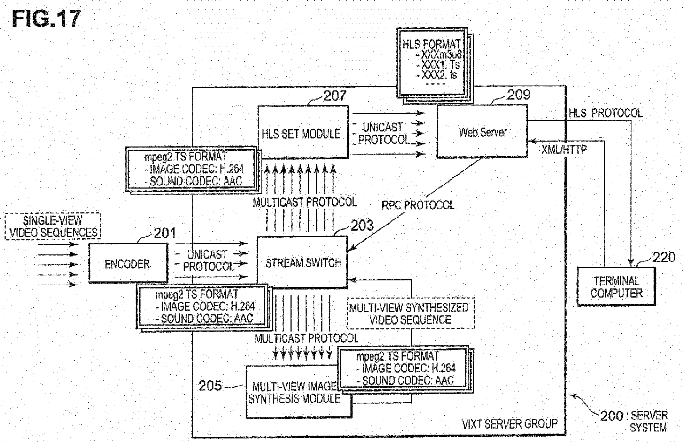

A configuration of a server in a case where the layout is changed on such a server side for distribution will be described by using FIG. 17. A server system 200 in FIG. 17 includes an encoder 201, a stream switch 203 for a unicast protocol, an HLS set module 207, a multi-view image synthesis module 205, and a web server 209.

The encoder 201 encodes the image in an mpeg2 format and the audio in an AAC format for the six provided video sequences, and transmits the video sequences to the stream switch 203 by the unicast protocol. The stream switch 203 transmits the video data to the HLS set module 207 and the multi-view image synthesis module 205 by a multicast protocol. The multi-view image synthesis module 205 processes to synthesize the plural multi-view video sequences for the sub-screens, for which the video data is combined. Such a process may be executed by using a general synthesis technology disclosed in EP1164794A1, EP917371A2, and USP5617135, for example.

In this embodiment, six patterns of the multi-view video sequences for the sub-screens are generated as will be described below. The six video sequences are set as video sequences D1 to D6. Then, the remaining five video sequences other than the video sequence D1 are set as sub-screen video sequences, the remaining five video sequences other than the video sequence D2 are set as sub-screen video sequences, the remaining five video sequences other than the video sequence D3 are set as sub-screen video sequences..., and the remaining five video sequences other than the video sequence D6 are set as sub-screen video sequences.

The multi-view image synthesis module 205 transmits these six patterns of the sub-screen multi-view video sequences to the stream switch 203. In this embodiment, six patterns of the multi-view videos are generated and transmitted to the stream switch 203, six patterns of the multi-view videos including examples of a multi-view video TD1, in which the video sequence D1 for the main screen is combined with the remaining five video sequences other than the video sequence D1, which are laid out as the sub-screen video sequences, and a multi-view video TD2, in which the video sequence D2 for the main screen is combined with the remaining five video sequences other than the video sequence D2, which are laid out as the sub-screen video sequences.

The stream switch 203 generates the six patterns of the multi-view videos, in each of which the six patterns of the sub-screen multi-view video sequences received from the multi-view image synthesis module 205 are combined with one of the six video sequences received from the encoder 201 for the main screen, and transmits the multi-view videos to the HLS set module 207. The HLS set module 207 converts a default multi-view video of these multi-view videos into an HLS format and transmits the multi-view video in the HLS format to the web server 209. The remaining multi-view videos are stored therein. In this embodiment, the multi-view video TD1 is adopted as the default multi-view video.

In this embodiment, the HLS set module 207 stores the multi-view video TD2 to TD6 other than the multi-view video TD1, which is distributed. However, a storing section may be provided separately.

The web server 209 converts the received multi-view video TD1 into a format used in the terminal computer that made the transmission request, and distributes the multi-view video TD1 to the terminal computer.

A description will be made on a process executed in a case where a layout change request is made for the multi-view video, which is being distributed. A description will be made on a process that is executed in a case where the multi-view video is changed to the multi-view video in which the video sequence D6 constitutes the main screen and the video sequence D1 to the video sequence D5 constitute the sub - screens when the multi-view video in which the video sequence D1 constitutes the main screen and the video sequence D2 to the video sequence D6 constitute the sub-screens is distributed.

A user of a terminal computer 220 clicks the video sequence D6 on the sub-screen in the multi-view video TD1, in which the video sequence D1 constitutes the main screen and the video sequence D2 to the video sequence D6 constitute the sub-screens. Accordingly, the terminal computer 220 transmits layout information (in an XML format), in which the video sequence D6 is changed to the main screen and the video sequences D1 to D5 are changed to the sub-screens, to the web server 209. In this embodiment, an application programming interface (API) for switching of the main screen is associated with clicking on the sub-screen. Thus, when any of the sub-screens is clicked, the terminal computer transmits the layout information, which instructs to set the clicked sub-screen to the main screen, to the web server 209. However, the present invention is not limited to this configuration.

The web server 209 inquires of the HLS set module 207 whether the multi-view video based on the received layout information is stored in the HLS set module 207. Since the HLS set module 207 has already buffered the multi-view video TD6, in which the video sequence D6 constitutes the main screen and the video sequence D1 to the video sequence D5 constitute the sub-screens, the HLS set module 207 converts the multi-view video TD6 into the HLS format and transmits the multi-view video TD6 in the HLS format to the web server 209. The web server 209 transmits the multi-view video TD6 to the terminal computer 220. Accordingly, the multi-view video TD6, the screen layout of which has been changed, is displayed on the terminal computer 220.

When a process other than switching between the sub-screen and the main screen is inquired, the HLS set module 207 answers that the process is not stored. Accordingly, the following process is executed. The web server 209 converts the received layout information to the layout information for the stream switch (an RFC protocol) and transmits the layout information to the stream switch 203. Based on this, the stream switch 203 generates the multi-view video that is based on the received layout information. The thus-generated multi-view video is transmitted to the web server 209 via the HLS set module 207. This allows distribution of the multi-view video on the basis of the new layout information. The generation of the plural patterns of the multi-view videos, in which the combinations of the main screen and the sub-screens are changed, is the same as that described above.

It is also possible to install in advance a multi-view video generation program, such as the multi-view image synthesis module 205 and the stream switch 203 in the server system 200 shown in FIG. 17, in the terminal computer, to transmit the each video data, which constitutes sources of the multi-view video, to the terminal computer, and to change the layout on the terminal. Accordingly, it is possible to dynamically change the layout on the terminal computer by changing such layout specified data.

Furthermore, instead of dynamically and automatically changing the screen layout on the terminal computer, it is possible to issue an alert before the screen layout is switched, to switch the layout either automatically or manually by the user after the alert is issued, or to issue an alert to restore the layout after the switching to the layout before the switching.

In this embodiment, switching timing is set at a time when the multi-view video starts being distributed. However, the layout may be dynamically switched in the middle of the distribution.

In addition, the switching may be executed in accordance with a property of the terminal computer (physical restriction of the terminal, a location of the terminal on a map, or the like). For example, regarding the physical restriction of the terminal, the number of the individual video sequences, which constitute the multi-view video, size of the main screen, or the like may be changed in correspondence with the resolution of the display screen or size of the screen. In addition, the screen layout may be switched in accordance with the location of the receiving terminal computer on the map. For example, if there is a tendency among the terminal computers in a certain area that a certain sub-screen of the multi-view video is switched to the main screen, the screen layout of the each terminal computer in the area may be switched to such a layout.

Furthermore, an initial screen may be switched not according to the viewing tendency of the user himself/herself or the other user but according to a content characteristic of the multi-view video.

Moreover, a commercial video (CM) may be adopted as the individual video sequence that constitutes the multi-view video. Such a video sequence can also be switched as described above.

Tag information provided to each scene and annotation (clickable text displayed as an overlay on the video) in a broad sense including image detection can be used as the attribute data. In addition, as such tag information, any tag, such as the tag originally added by the system, the tag added to the video by the user, and the tag analogized and added to the video by the system, may be used.

In the above embodiment, the case has been described where, of the displayed sub-screens, the individual video sequence selected for the main screen is laid out for the main screen for the other user. However, it is also possible to lay out the individual video sequence, which has not been selected for the sub-screen in advance, for the sub-screen or further for the main screen. For example, when the six individual video sequences are initially distributed in one screen from the distributing computer, a list of the individual video sequences, each of which is not displayed initially but is associated as the seventh individual video sequence onward, is distributed. If there is a higher tendency for the user to lay out the individual video sequence that is associated as the seventh individual video sequence onward for the sub-screen or the main screen, it is possible to switch the screen layout of the other terminal computer based on such a tendency.

In this case, instead of switching the sub-screen, the individual video sequence may be displayed in a pop-in window. Also in this case, the number of the individual video sequences that constitute the multi-view video may be increased or reduced.

In addition, an inactive action by the viewer may be extracted as a parameter. For example, an advertisement obtained by a higher bid is forcibly displayed, or the layout of the multi-view video is dynamically changed by time on the basis of the tag information added to the each individual video sequence.

In the above embodiment, the case where the individual video sequences that constitute the multi-view video are switched has been described as an example. However, another process can also be executed, such as provision of an outlink connected to another website over the Internet (for example, a link pointed to another electric commerce website) or an inlink (a link pointed to another related video).

In the above embodiment, the screen layout is automatically changed. However, a message such as "the screen layout will be switched" may be provided to the user before the switching, and only when the user allows, the process may be executed to change the layout. Then, after the switching, an icon to restore the screen layout before the switching may be displayed to ask whether the user desires execution of a process to restore the screen layout.

As a computation method of an evaluation value of the each viewpoint, a general evaluation method of a video can be adopted. For example, the number of high evaluations for the each viewpoint of a camera, the number of high evaluations for the multi-view video, and the like may be summed as a score. The same can be applied to another identifying log other than the number of high evaluations.

In addition, the each score may be weighed. To decide the weighing, a regression analysis may be performed.

To estimate the viewing tendency, maximum likelihood, Bayes estimate, association, collaborative filtering, Bayesian network, text mining, or the like can be adopted, for example. In addition, in order to remotely switch the display from the distributing computer, conditions (rules) like those shown below may be stored. If the display is switched in a specified order as shown below, the next screen may be switched by following the condition. For example, a condition that "if the main screen is switched in an order of the viewpoint "1" → "6" → "3" → "2", the main screen is next switched to "5" in five seconds" is transmitted as a rule to the terminal computer. Then, when the main screen is switched in the order of 1 → 6 → 3 → 2 on the terminal computer, the main screen may automatically be switched to 5.

When the past viewing experiences are too broad to show the tendency, a random flag may be transmitted to the terminal computer. Then, a random number may be generated on the terminal to randomly change the screen layout.

In the above embodiment, the screen layout is switched when the tendency described above exceeds a threshold. On the contrary, the screen layout may be switched when a set value is smaller than the threshold. In addition, such a threshold may not be an absolute value but may be a relative value, which is determined, for example, in accordance with a ranking list of the viewer tendencies (extract the top 10, "extract a low position to the last in the list").

The switching of the screen layout may be determined by likelihood. If the likelihood exceeds the significance level, the likelihood may be determined, for example, by t value, z value, p value, or the like. In addition, as an information criterion, any of various information criteria, such as Akaike's information theoretic criterion (AIC), Bayesian information criterion (BIC), or the like can be adopted.

In this embodiment, as switching elements, various types of the screen layouts are adopted, such as the number of cameras in the constituent camera group(e.g.: six screens → four screens), the layout of the main screen and the sub-screens. For example, as the screen layout, the layout of the constituent camera group (e.g.: camera A: left, camera B: right → camera A: right, camera B: left), the number of display of the each camera (e.g.: premium view, restricted view), zoom-in/zoom-out ratios of the each camera, a view angle of the video (e.g.: normal, panoramic), and the like are , and can also be switched.

Furthermore, it is possible to switch a screen component ratio of the individual video sequence to an advertisement, the display or non-display of the ticker and the tag, a sliding speed of a video thumbnail, automatic zooming (for example, getting close to an object), and the like.

As the switching of the screen layout, the video screen can also be switched while a playback position is moved. For example, when the main screen is switched from "6" → "3" in 1 minute 20 seconds after the initial distribution, a process to play backward for 10 seconds is frequently executed. In such a case, it is possible to switch the main screen from "6" → "3" in 1 minute 20 seconds after the initial distribution and play the switched main screen after the process to play backward for 10 seconds is executed.

Switching to another multi-view video is also possible. For example, there is a case where a fan of a member α1 in a singer group α switches to another multi-view video with the member α1 after the viewpoint on the member α1 in the multi-view video becomes unavailable in 5 minutes 20 seconds after the start of the video. In such a case, the multi-view video is automatically switched for the users who have the same user attribute, so that the user needs not execute the process to switch the multi-view video.

In the same situation, the plural multi-view videos may be displayed on the screen, so that the combination of the individual video sequences constituted by the user on the user terminal can be changed. Also, the components of the multi-view video can be switched by storing such a history of switching.

In the above embodiment, the screen layout is switched. Instead, a sound property may be switched. For example, in a case where a process to increase a sound volume is frequently executed in 2 minutes 20 seconds after the initial distribution, it is possible to increase the sound volume in 2 minutes 20 seconds after the multi-view video is initially distributed. At this time, the volume increase may be overlapped with the switching of the screen layout. As the sound property, muting, switching of main sound/second sound channels, switching of stereo/monaural sounds, start and stop of background music, and the like can be adopted.

A language to be used may be switched instead of the sound property. Accordingly, when an interview of a person who speaks a different language from the user is streamed in the middle of the video, the language used by the person can be translated and informed.

Instead of the screen layout, a physical element may be switched. Change of brightness/luminance of the monitor of the terminal computer (e.g. monochrome/color/sepia, RGB), change of a distribution band/distributed image quality (e.g.: 128 kbps → 256 kbps, 240 p → 720 p), turning of a network camera connected to the terminal computer, a zooming process, a focusing process, or the like may be allowed.

As described above, instead of the switching of the screen layout, or in combination with this, the imaging condition of the certain video captured by the terminal computer is switched. As a result, it is possible to distribute the highly sophisticated multi-view video and to dynamically switch the highly sophisticated multi-view video.

In the above embodiment, the process of the terminal computer is executed by a browser program. However, a dedicated hardware or software can be installed instead.

In this embodiment, the viewing operation history on the terminal is acquired by the distributing computer itself to perform various analyses. However, after the data process is executed to a certain degree on the terminal, a result thereof may be transmitted to the distributing computer and stored therein. For example, the data process includes a ratio of switching to the main screen. In this case, instead of transmitting the entire viewing operation history and all the time stamps to the distributing computer, a value obtained from these may be stored in the distributing computer.

In this embodiment, the screen layout of the distributed multi-view video data is changed by referring to the viewing behavior history of the other user, so as to set the same screen layout. However, the switching of the screen layout is not limited to this.

The terminal computer may be a cellular phone or the like, instead of a personal computer.

In the above embodiment, in order to realize the functions shown in FIG. 1, the CPU is used, and the software is used to realize such functions. However, a part or a whole of the functions may be realized by using hardware, such as a logic circuit.

A part of processes executed by the above program may be executed by the operating system (OS).

## Claims

1. A multi-view video distribution system comprising
A) a distributing computer including:
a1) distributing means for distributing multi-view video data, in which a plurality of multi-view video sequences for the same subject as individual video sequences is combined and laid out on one screen;
a2) user-specific viewing behavior history receiving means for receiving a viewing behavior history on a distributed multi-view video; and
a3) user-specific viewing behavior history storing means for storing the received user-specific viewing behavior history for each user, and
B) a terminal computer including:
b1) receiving means for receiving the multi-view video data from the distributing computer;
b2) playback means for playing the multi-view video data; and
b3) viewing behavior history transmitting means for transmitting the viewing behavior history on the played multi-view video data to the distributing computer, wherein
C) when distributing the multi-view video data to a certain user, the distributing means refers to the viewing behavior history of another user that has been stored in the user-specific viewing behavior history storing means and then distributes the multi-view video data, a screen layout of which is changed.

2. The multi-view video distribution system according to claim 1, wherein
the viewing behavior history is a screen layout tendency.

3. The multi-view video distribution system according to claim 2, wherein
the multi-view video data includes at least one main screen and at least one sub-screen of the individual video sequences, and
the distributing means distributes the multi-view video data, the screen layout of which is changed, on the basis of a switching rate that, of the plural individual video sequences, the individual video sequence initially displayed on the main screen is switched to be displayed on the sub-screen.

4. The multi-view video distribution system according to claim 2, wherein
the multi-view video data includes at least one main screen and at least one sub-screen of the individual video sequences, and
the distributing means distributes the multi-view video data, the screen layout of which is changed, on the basis of a switching rate that, of the plural individual video sequences, the individual video sequence initially displayed on the sub-screen is switched to be displayed on the main screen.

5. The multi-view video distribution system according to claim 2, wherein
the multi-view video data includes a main screen and a sub-screen, a display area of which is smaller than the main screen, and
the distributing means distributes the multi-view video data that changes the screen layout of the multi-view video data on the basis of a display rate of the individual video sequence of the plural the individual video sequences that is changed during playback.

6. The multi-view video distribution system according to claim 1, wherein the viewing behavior history is an evaluation of the individual video sequence that is made by the other user during playback.

7. The multi-view video distribution system according to claim 1, wherein the distributing means refers to the viewing behavior history of a user who belongs to a user group with a similar user attribute, and distributes the multi-view video data in which the screen layout of the multi-view video is changed.

8. The multi-view video distribution system according to claim 7, wherein the user attribute is a static attribute of the user.

9. The multi-view video distribution system according to claim 7, wherein the user attribute is a viewing tendency attribute that is changed by viewing.

10. The multi-view video distribution system according to claim 9, wherein
the viewing tendency attribute is an attribute of a video that was viewed in the past.

11. The multi-view video distribution system according to claim 9, wherein the viewing tendency attribute is an attribute of a screen that was viewed in the past.

12. The multi-view video distribution system according to claim 1, wherein
the multi-view video, the screen layout of which is changed, is added with additional data for switching the screen layout on the terminal computer, and
the playback means of the terminal computer changes the screen layout on the basis of the additional data for playback.

13. The multi-view video distribution system according to claim 12, wherein the screen layout is automatically changed without an operation by a viewer of the terminal computer.

14. The multi-view video distribution system according to claim 12, wherein the viewer of the terminal computer is informed of the change of the screen layout before the change is made.

15. The multi-view video distribution system according to claim 14, wherein the screen layout is automatically changed after the viewer of the terminal computer is informed of the change.

16. The multi-view video distribution system according to claim 14, wherein
the screen layout is changed after the viewer of the terminal computer is informed of the change only in a case where the viewer allows the change.

17. The multi-view video distribution system according to claim 13, wherein after the screen layout is changed, information on restoration of the screen layout before the change is informed.

18. The multi-view video distribution system according to claim 1, wherein the multi-view video, the screen layout of which is changed, is transmitted from the distributing computer to the terminal computer.

19. The multi-view video distribution system according to claim 1, wherein the distributing computer stores plural sets of the multi-view video data, and when a distribution request, which specifies a certain set of the multi-view video data is provided from the terminal computer, the distributing computer refers to the viewing behavior history of the other user, changes the screen layout of the multi-view video upon distribution, and then distributes the multi-view video.

20. The multi-view video distribution system according to claim 1, wherein the distributing computer stores plural sets of the multi-view video data, and the distributing computer refers to the viewing behavior history of the other user during distribution, changes the screen layout of the multi-view video, and then distributes the multi-view video.

21. The multi-view video distribution system according to any one of claims 12 to 17, wherein
when the multi-view video, the screen layout of which is changed, is distributed, control data that restricts switching in accordance with a terminal property of the terminal computer is transmitted, and
the playback means of the terminal computer determines whether to play the video, the screen layout of which has been changed, on the basis of the control data and attribute information of the terminal that play the video.

22. The multi-view video distribution system according to claim 21, wherein the attribute information of the terminal computer is location information of the terminal.

23. The multi-view video distribution system according to claim 21, wherein the attribute information of the terminal computer is physical restriction of the terminal.

24. A multi-view video distribution device comprising:
distributing means for distributing multi-view video data, in which a plurality of multi-view video sequences for the same subject as individual video sequences is combined and laid out on one screen; and
user-specific viewing behavior history storing means for receiving a viewing behavior history on a distributed multi-view video for each user and storing the received viewing behavior history for the each user, wherein
when distributing the multi-view video data to a certain user, the distributing means refers to the viewing behavior history of another user that has been stored in the user-specific viewing behavior history storing means and then distributes the multi-view video data, a screen layout of which is changed.

25. A multi-view video distribution device comprising:
receiving means for receiving multi-view video data, in which a plurality of multi-view video sequences for the same subject as individual video sequences is combined and laid out on one screen, from a distributing computer; and
playback means for playing the multi-view video data; and
viewing behavior history transmitting means for transmitting the viewing behavior history on the played multi-view video data to the distributing computer, wherein
the multi-view video data, the screen layout of which is changed, is added with additional data for switching the screen layout on the terminal computer, and
the playback means changes the screen layout on the basis of the additional data for playback.
